# EUROPEAN PATENT APPLICATION

(11) **EP 0 604 075 A2**
(43) Date of publication of application: **29.06.1994**
(21) Application number: 93309947.5
(22) Date of filing: 10.12.1993
(51) Int. Cl.: B32B 31/28, B05D 1/28, B05D 3/06

(54) **Production of a hard coated substrate**

(30) Priority: 22.12.1992 US 994796
(71) Applicant: GENERAL ELECTRIC COMPANY, Schenectady, NY 12345 (US)
(72) Inventor: Sieloff, Ronald Frank, Evansville, Indiana 47712 (US); Crouch, Earl Thomas, High Point, North Carolina 26265 (US)
(74) Representative: Pratt, Richard Wilson

(57) **Abstract**

UV curable material is metered onto a casting drum and is partially cured anaerobically adjacent the surface of the drum. The film is applied to a substrate with the uncured portion thereagainst and a post radiation cure is effected to fully cure and adhere the coating onto the substrate. In other embodiments the substrate may be molten or the coating may be fully cured and applied to the substrate by means of a UV curable adhesive compatible with the coating and the substrate.

## Description

### BACKGROUND OF THE INVENTION

This invention relates to a method and apparatus for forming a hard coating on the surface of a polymeric substrate. More particularly, it relates to an improved method and apparatus for forming an abrasion-resistant, radiation-cured coating without a carrier on the surface of a polycarbonate substrate. The invention also relates to the article produced from the method.

Polymeric substrates are often provided with protective coatings. When it is important that the substrate be transparent, it is generally also important that the coating exhibit high optical quality while also retaining its other physical attributes, such as abrasion resistance and high gloss.

Radiation curable hard coatings have been produced from various monomers and cross-linking oligomers in which the monomer acts as a solvent by providing the necessary physical and rheological properties for the uncured coating. Curing occurs when radiation (or heat) is applied directly to the article surface having the coating thereon. The monomer enters the polymerization with the cross-linking oligomers and does not volatilize. In order to be effective, curing must be accomplished in the absence of oxygen which is a cure inhibitor. The elimination of oxygen may be accomplished by continuously purging the cure chamber with nitrogen gas. However, expense and safety considerations make this an unattractive alternative.

Radiation curable hard coats have been produced by various methods. In one such method, the uncured coating is deposited on a substrate and carried into anaerobic contact with a drum. The coating is exposed to UV radiation through the substrate whereby the cure is effected while the coating is captured between the substrate and the drum. The carrier hardcoat may be thereafter laminated on a polycarbonate substrate. See, for example, U.S. Patent No. 4,946,531, assigned to the Assignee herein and incorporated by reference.

In U.S. Patent No. 3,658,620, a perforated web or membrane is impregnated so as to be located within a radiation curable material. One side of the coating adjacent a drum is cured while the opposite free surface remains uncured and is laminated against a substrate. Thereafter the laminate is post cured through the coating. The foregoing methods require both a carrier for the coating and a subsequent lamination step. The coatings are also limited as to the type and thickness of substrate to which they may be laminated. For example, it is desirable to continuously apply a coating onto a web or substrate which cannot readily be wrapped around the circumference of a casting roll with controlled pressure. Also, it has not been possible to form a hard coating directly on a substrate in a softened condition.

### SUMMARY OF THE INVENTION

The present invention is based upon the discovery that a thin hard coat may be directly formed on a casting surface for application to a substrate without the necessity of an intermediate carrier. Moreover, the invention contemplates the employment of at least a partial anaerobic radiation cure of the coating adjacent the casting surface followed by lamination onto a polymeric carrier. The present invention also relates to a subsequent full cure step after application to the carrier.

In one embodiment, the invention is directed to a method for forming an abrasion-resistant, radiation-cured coating on a surface of a polymeric substrate. The method comprises the steps of:
(a) applying the uncured coating material onto a casting surface;
(b) exposing the coating to radiant energy by directing the radiant energy through the coating from the surface opposite the casting surface carrying the radiation-curable coating thereon, thereby curing at least the coating adjacent the casting surface; and
(c) applying the coating to the substrate.

The substrate may be any conventional polymeric film or sheet material which is rigid or flexible and which is capable of receiving a coating material as it passes through a coating means. The radiation-curable coating is capable of adhering to the substrate, and is generally a nonvolatile coating comprising a cross-linkable resin and a photoinitiator.

The form of radiant energy that may be used in the process of the present invention should be capable of controlled partial curing whereby a post cure step may be performed.

If desired, a plurality of coatings may be applied to the surface of the substrate by this method. The substrate may be rigid, flexible or molten. The coatings used in the present invention may be fully cured on the casting surface, and applied on the surface of the substrate. The coatings may serve as preliminary coatings for subsequently-deposited conventional coatings.

The process of the present invention results in an article having an abrasion-resistant coating with excellent physical characteristics, such as hardness and chemical resistance, as well as a high degree of optical clarity. The process eliminates the need for a nitrogen blanket in radiation-curable systems.

### BRIEF DESCRIPTION OF THE DRAWINGS:

Fig. 1 is a schematic side elevation of an apparatus useful in performing the method of the present invention, in which a radiation curable coating is applied to both sides of a molten polymeric substrate;
Fig. 2 is an enlarged side sectional elevation illustrating the initial cure of the coating on the casting surface of a drum;
Fig. 3 is an enlarged side sectional elevation illustrating the simultaneous application of coatings on opposite sides of a molten substrate from Fig. 1; and
Fig. 4 is a schematic side elevation of another embodiment of the invention in which a precast fully cured coating is applied to a rigid polymeric substrate.

### DESCRIPTION OF THE INVENTION:

The invention relates to a method and apparatus whereby the advantages of continuous coating may be translated to the on-line or off-line coating of webs. The present invention is particularly useful in coating thicker webs that cannot be easily wrapped around the circumference of a casting roll with controlled pressure.

According to an embodiment, a radiation curable fluid is uniformly metered onto the casting surface of a casting roll and is at least partially cured prior to reaching a nip point where the coating is transferred from the casting roll to a substrate or sheet. The partial cure takes place anaerobically at the interface of the coating and the casting roll. The degree of coating cure is sufficient to allow the partially cured, newly exposed side of the coating layer to retain its mirror image of the roll surface onto which it was originally cast. Subsequent curing develops the final coating properties and enhances the adhesion of the coating to the sheet. In an exemplary embodiment, opposed sheet-forming rolls may be used as the casting rolls. Radiation cure is used before and after the nip point between the sheet-forming rolls and the coating is transferred simultaneously with sheet formation.

The method of the present invention is suitable for providing an abrasion resistant, radiation-cured coating on the surface of a wide range of polymeric substrates which may be in the form of sheets, films, laminates, etc. While the particular apparatus depicted in the drawing is intended for the direct application and cure of a coating material on a continuously formed molten substrate, the apparatus may be readily employed to apply such a coating material on individual rigid sheets of the substrate or continuously on flexible sheet. The composition of the substrate is not critical and may include acrylics, polyesters, polycarbonates, phenolics, urethanes, etc., or mixtures thereof. A preferred substrate for the method of the present invention is one formed from a thermoplastic polycarbonate material, such as Lexan® resin, a product of General Electric Company. Typical examples of polycarbonate resins are described in U.S. Patent No. 4,351,920, and are obtained by the reaction of aromatic dihydroxy compounds with phosgene, as well as those obtained by the reaction of aromatic dihydroxy compounds with carbonate precursors such as diaryl carbonates. U.S. Patent No. 4,351,920 also describes various methods for the preparation of polycarbonate resins which may be used as substrates in the present invention.

The radiation-curable coating used in the method of the present invention may comprise a wide variety of compositions. The choice of a particular coating will depend on several factors, such as the type of substrate used, the particular type of radiant energy applied, and the particular physical properties desired for the coating. Typical radiation-curable coatings are described in the Kirk-Othmer Encyclopedia of Chemical Technology, Third Edition, Volume 19, 1982, pp. 607-622. The radiation-curable coating systems are generally comprised of polymers containing acrylic, methacrylic or fumaric vinyl unsaturation along or attached to the polymer backbone. The coating systems generally also comprise monomers having a molecular weight of from about 100 to 500, and having single unsaturation sites.

Typical of these systems are high boiling acrylate esters, although styrene may also be used as a monomer in selected formulations. A cross-linking oligomer containing di-, tri-, or multifunctional unsaturation sites is generally also a part of the radiation-curable coating system. Typical coating formulation ingredients are listed on page 617 of the Kirk-Othmer reference cited above. It is preferred in the practice of the present invention that the coating be nonvolatile, although a coating material containing volatile components may also be used if certain modifications are made, as described below.

Any of the well-known UV-curable coating compositions are suitable for the present invention. One typical UV-curable coating composition is described in U.S. Patent No. 4,477,529, incorporated herein by reference, and comprises azobisisobutyronitrile, at least one UV-curable cross-linkable polyfunctional acrylate monomer, and a polysiloxane-polyether block copolymer. Another suitable coating composition for the present invention is described in U.S. Patent No. 4,198,465, incorporated herein by reference, and comprises a photoinitiator, a UV light curable cross-linkable polyfunctional acrylate monomer, and resorcinol monobenzoate. Methods of preparing UV-curable compositions are also well-known in the art; one such method is described in U.S. Patent No. 4,198,465.

The process of the present invention comprises the steps of:
(i) applying an uncured coating material to a surface of the casting drum, the coating material comprising, for example, an amount of polyfunctional acrylate ester monomers and an amount of a photoinitiator;
(ii) passing the applied uncured coating material through a constant pressure compression nip, defined between a longitudinally rotating cylindrical casting drum and a longitudinally rotating cylindrical nip roll, the casting drum and the nip roll having parallel axes of rotation, the nip roll contacting an uncured surface of the coating and the casting drum contacting the applied uncured coating material, the compression nip exerting a substantially constant pressure to said applied uncured coating, said compression nip pressure being selected from between about 5 psi and about 50 psi to eliminate air and excess coating material from between the coating and the drum thereby providing a substantially uniform layer of uncured coating material on the drum, said excess coating material forming a bead of coating material between said nip roll and said casting drum across the width of said coating adjacent to and upstream from said compression nip;
(iii) curing the coating layer by directing ultraviolet radiation through the coating layer while the coating layer is in anaerobic contact with the drum surface to provide at least a partially cured self supporting coating having a cured surface adjacent the casting drum and with cured surface characteristics determined by the casting drum surface, and an uncured free surface, the coating having a thickness selected from between about 0.1 and about 1.5 mils;
(b) laminating the coating onto a polymeric substrate, the laminating involving;
(i) bringing the uncured free surface of the coating into a position adjacent to the surface of said substrate;
(ii) passing the coating through a laminating nip to eliminate diatomic oxygen and excess adhesive from between the coating and the substrate, said laminating nip pressing the coating with a substantially constant pressure to create a substantially uniform adhesion between the uncured surface of the coating film and the substrate; and
(iii) directing ultraviolet radiation through the cured surface of the coating to cure the uncured surface of the coating and bond the coating to the substrate.

In an alternative embodiment, step (a) (iii) comprises:
curing the coating by directing ultraviolet radiation through the coating while the coating is in anaerobic contact with the drum surface and a free surface of the coating is under an inert atmosphere to provide a film having a fully cured coating exhibiting surface characteristics determined by the casting drum surface, the cured coating having a thickness selected from between about 0.1 and about 1.5 mils;
and step (b) comprises laminating the hardcoated coating onto a polymeric substrate, the laminating involving;
(i) preparing an overlay by placing an amount of an acrylic adhesive between a surface of the substrate and the coating, and by bringing the coating into a position adjacent to the surface of said substrate;
(ii) passing the overlay through a laminating nip to eliminate diatomic oxygen and excess adhesive from between the coating and the substrate, said laminating nip pressing the overlay with a substantially constant pressure to create a substantially uniform layer of adhesive between the coating and the substrate, any excess adhesive forming a bead of adhesive across the width of said substrate between said substrate and said coating adjacent to and upstream from said laminating nip; and
(iii) curing the adhesive layer by directing ultraviolet radiation through the coating to the adhesive layer to cure the adhesive layer and bond the coating to the substrate, said cured adhesive layer having a thickness selected from between about 0.2 and about 2 mils.

In yet another embodiment, the invention further comprises extruding the substrate in sheet form from a supply of extrudable polymeric material by passing the sheet through a constant pressure compression nip defined between the casting drum and a longitudinally rotating second nip roll to form the substrate into a sheet of uniform thickness, the casting drum and second nip roll having parallel axes of rotation, said second nip roll being located downstream of the first mentioned radiation cure in step (a) (iii) to transfer the at least partially cured coating from the casting drum to the substrate simultaneously with the formulation of the sheet of uniform thickness.

In a variation of the above process, the coating may be fully cured on the casting drum as above said and contacting the fully cured coating with the softened substrate effects an adhesive bond therebetween, while a further cure of the coating or an adhesive is obviated.

The ultraviolet radiation curable coating material of the present invention is preferably solvent free and should have an abrasion resistance when cured such that when employing a CS10F wheel and a 500 gram loading according to ASTM testing procedures there is less than a 10% change in haze per 500 cycles for transparent silica reinforced hardcoats. This degree of abrasion resistance of the hardcoat compares favorably with that of the best prior art hardcoats. The preferred acrylic coating compositions typically have viscosities of between 100 centipoise. The preferred acrylic coating materials of the present invention comprise polyfunctional acrylate ester monomers and a photoinitiator. See, for example, U.S. Patent No. 4,946,531 which is assigned to the Assignee herein and incorporated by reference for suitable coating materials. When fully cured, the coating can be wrapped around a 3" roll without cracking.

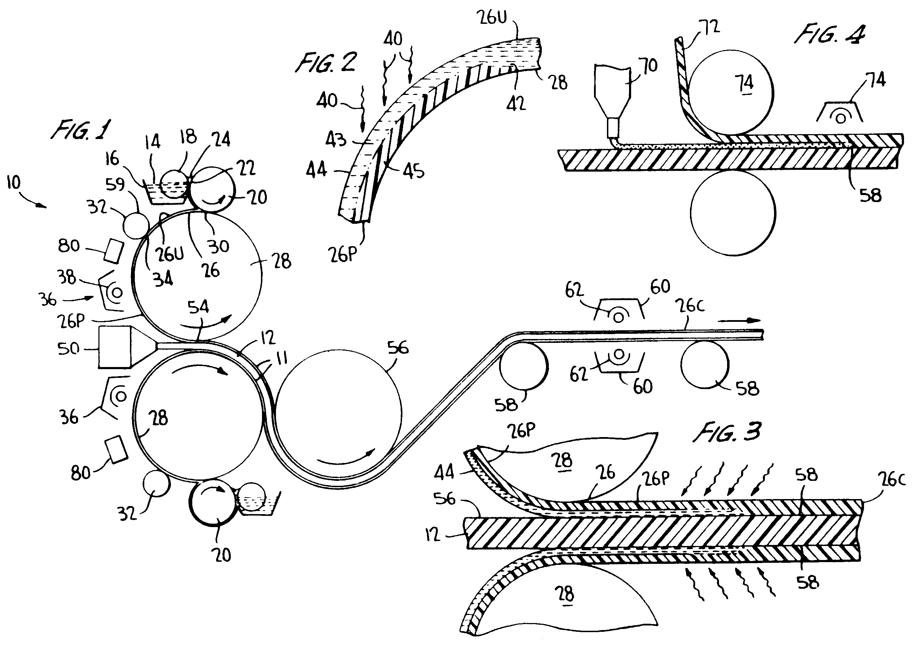

Exemplary apparatus for applying and curing a coating on the surface of a polymeric substrate in accordance with the method of the present invention is depicted in Figs. 1-3. It is to be understood that any conventional system or device may be used for metering or doctoring the coating material on the casting surface. In Fig. 1, apparatus 10 for coating opposite sides 11 of a substrate 12 is depicted and similar elements are referred to by the same reference numbers. It is to be understood that one or two sided coating is contemplated and what is described for one side of the substrate 12 is applicable to the other.

A radiation-curable coating material 14 contained in reservoir 16 is continuously taken up by a roll 18. The use of a gravure roll coating system is known in the art and is described, for example, in U.S. Patent No. 4,302,486. Typically, the gravure roll 18 has a ridged surface (not shown), with steel bars or a pattern of ridged dikes protruding from the roll surface, the depressions formed from such an array being capable of picking up and retaining the coating material 14 within reservoir 16. A coating roll 20 engages the gravure roll 18 at a nip 22. This arrangement allows coating material 14 riding on the surface of gravure roll 18 to accumulate in a bead 24 upstream of the nip 22. The gravure roll 18 rotates in the direction shown by the arrows whereby the coating material 14 is transferred as an uncured coating 26U to transfer roll 22, in circumferential contact with gravure roll 14, and which revolves in the opposite direction. Transfer roll 14 may be driven by an outside power source (not shown) and will thereby coordinate the movement of gravure roll 18 (which may also be driven by an outside power source).

The coating material 14 may be cured in stages. Accordingly, where appropriate, the resulting coatings will be referred to in terms of the cure condition of the coating material 14, namely: uncured coating 26U, partially cured coating 26P, and cured coating 26C, or simply coating 26 when the cure state is not relevant.

Casting roll 28 engages the coating roll 20 at the nip 22 and receives the uncured film 26 thereon as shown. The casting roll 28 is driven in the opposite direction of the coating roll 20. The relative difference in the speed of the coating and casting rolls 20 and 28 may be adjusted to partially regulate the thickness of the uncured film 26U carried by the casting roll 28.

An idler roll 32 engages the casting roll 28 at a nip 34. In the embodiment illustrated, idler roll 32 has a silicone rubber covering. The uncured coating 26U does not stick to it. The pressure of the idler roll 32 against the casting roll 28 is adjustable for further regulating the thickness of the uncured film 26U downstream of the nip 34. In this manner, coating material 14 may be uniformly applied to the surface of casting roll 28.

It will be apparent to those skilled in the art that adjustments may be made in the coating system in order to apply the coating efficiently. Typical adjustments involve roll speed, coating material viscosities, and nip spacings. Furthermore, it is not critical in the method of the present invention to apply coating material 10 by gravure roll means, as described above. Coating material 10 may also be applied by any of a number of well-known coating methods, such as spraying, brushing, electrodeposition, curtain coating, and dipping, as well as other well-known roll coating methods. In the exemplary embodiment, reverse roll coating is depicted. The thickness of radiation-curable coating is dependent upon the end use of the article and the physical properties desired, and may range from thin film coatings on the order of microns to about 4.0 mils for a nonvolatile coating.

A radiation source 36 in the form of one or more UV lamps 38 is disposed downstream of the nip 34 between casting roll 28 and idler roll 32. The radiation source 36 delivers a measured flux of UV radiation 40 (Fig. 2) which is directed towards the uncured coating 26U. The radiation 40 initiates partial curing of the coating 26. In particular, partial curing occurs near an interface 42 formed between the coating 26U and the surface 41 of coating roll 28 as shown in Fig. 2. The interface 42 is shielded from ambient oxygen so that its cure is uninhibited. The free surface 44 of the coating 26P, however, is exposed to oxygen. Accordingly, cure at the surface 44 is inhibited. As a result, the coating 26U undergoes a partial cure at 26P such that the material 43 near the free surface 44 remains uncured or sticky while the material 45 at the interface 42 near the casting surface 28 cures by cross-linking to a nonsticky relatively self supporting condition. The partially cured coating 26P is carried by the casting roll downstream as illustrated.

In the embodiment shown, a pair of the casting rolls 28 are disposed for rolling engagement at a compression nip 54. A source of molten polymeric material 50 (e.g., polycarbonate) is fed through an extrusion die 52 to the nip 54 to form substrate 12. At the same time, each of the partially cured coatings 26P carried by the respective casting rolls 28 is transferred to opposite sides 11 of the substrate 12 (Fig. 3).

The cured portion 45 of the coating 26P peels away from the casting roll surface 42 at the nip 54. The respective uncured portion 43 of each partially cured coating 26P adheres to the opposite sides 54 of the molten substrate 12 forming an interpenetration zone 58 at each interface. The interpenetration zone 58 is free of ambient oxygen.

After the partially cured coating 26P is applied to the substrate 12, the thus coated sheet 12C is guided around a large idler roll 56, to a pair of support rolls 58. A source 60 of UV radiation from one or more UV lamps 62 is directed at the partially cured coating 26P from opposite sides as illustrated in Figs. 1 and 3. The uncured portion 43 of the coating 26P, adjacent the substrate 12 surface 54 undergoes an anaerobic post cure reaction whereby the coating becomes fully cured at 26C.

The choice of materials which form the rolls used in the present invention is not critical. The rolls may be made of plastic, metal (i.e. stainless steel, aluminum), rubber, ceramic materials, and the like. Furthermore, the surface of each roll should be smooth and resilient. Typically, each roll is provided with a sleeve or cover on its surface. The idler roll 32 may be provided with a sleeve 59, preferably formed from a resilient silicone material or one of the variety of currently available synthetic rubber compounds and blends thereof having a hardness ranging between about 10 and about 90 durometer. In an exemplary embodiment, a 6" diameter idler roll 32 with a 1/2" sleeve of 20 durometer is applied at 32 lb/linear inch against casting roll 28 to produce a 13 micron film 26 at 80 feet per minute with the coating temperature controlled to result in a coating viscosity of 1.2 poise. The sleeve 59 is snugly fitted over the roll surface to provide a smooth, friction-minimizing surface.

The applied pressure at the interface of idler roll 32 and drum 28 may be adjusted by well-known methods, such as a spring mechanism (not shown), attached to the axle of idler roll 32, which selectively urges the roll toward casting drum 28. The applied pressure can be adjusted according to a variety of parameters when different coatings pass through the nip 34.

Casting drum 28 surrounds a central axis 60, and may be made from a wide variety of materials, such as various plastics, ceramics or metals. Typically, the drum 28 is comprised of stainless steel or chromium-plated steel. Furthermore, it is preferred that the drum be independently driven by an outside power source (not shown).

Casting drum surface 41 may be provided with a wide variety of textures or patterns, depending upon the texture or pattern desired to be imparted to coating 10. For instance, surface 41 may be a highly polished chrome-plated surface if a high degree of gloss is desired. If a lower sheen is desired for the coating, the surface 41 may be less polished, or may be rubberized so as to provide a matte texture to the coating. Similarly, a design pattern may be embossed on surface 41 to impart a mirror-image design pattern to the coating 26. The fully cured coating 26C will thus become a permanent mirror-image of casting drum surface 41.

In order to ensure the exclusion of air from and adjacent to coating 26 and the surface 42 of the casting drum 28 prior to initial curing the pressure of being exerted at the nip 34 of the idler roll 32 may be adjusted. The adjustment of applied pressure may be accomplished by a spring as described above. The exact pressure that can be exerted at nip 34 will depend on many factors, e.g., the viscosity of coating 26, the degree of detail in the design pattern on surface 41 (if present), and the desired thickness of coating 26. Likewise, when the partially cured coating 26P peels away from casting drum 28 and adheres to the substrate 12, the pressure between the casting rolls 28 at the nip 54 both forces air from the interface and regulates the thickness of the substrate 12.

In each case after the coating material 14 is applied to the casting roll 28 and substrate 12, the coating may be cured in stages by means of radiant energy. The radiant energy is transmitted from respective radiant energy sources 36 and 60 through the coating in various stages of cure, i.e. 26U and 26P and is absorbed thereby. Initial cure occurs in the absence of oxygen at the casting surface 42. Subsequent cure occurs in the absence of oxygen at the surface 11 of the substrate.

The choice of a radiant energy source will depend upon several factors, including the chemical nature of the substrate as well as the chemical nature of the coating material being cured. It is important to select a radiant energy source which will not adversely affect substrate, e.g., by causing discoloration. In those instances in which acrylic-based coatings are applied to polycarbonate substrates, the most appropriate radiant energy source is UV radiation. An advantageous range of wavelength of the UV radiation is from about 1800 Angstroms to about 4000 Angstroms. The lamp system used to generate such UV radiation may include discharge lamps, e.g., xenon, metallic halide, metallic arc, or high, medium, or low pressure mercury vapor discharge lamps, etc., each having operating pressures of from as low as a few milli-torrs up to about 10 atmospheres. The radiation dose level applied to the coating 26 may range from about 2.0 J/cm² to about 10.0 J/cm². A typical UV curing system suitable for the present invention is a Linde medium pressure mercury lamp, as described in U.S. Patent No. 4,477,529.

The number of lamps directing UV light to the surface of the substrate is not critical; however, a greater number of lamps may allow a higher production rate. Typically, two lamps, each producing 200 watts/linear inch of radiant energy, are sufficient for an acrylic-based coating having a thickness of about 0.5 mils, when the production line speed is about 50 feet/minute. Such a curing procedure should result in both the polymerization of the polyfunctional acrylic monomers and the cross-linking of the polymers to form hard, abrasion-resistant, non-tacky coatings. It will be understood to those skilled in the art that different substrates and different coating systems may require the use of different forms of radiant energy, such as electron beam curing, gamma ray curing, infrared curing, and curing methods which use visible wavelengths of light. Many of these methods are described in detail, along with descriptions of polymeric coatings amenable to cure by such methods, in the Kirk-Othmer reference cited above.

It is possible to employ the present invention in various ways to produce single or dual side hard coats for various polymeric substrates. In the embodiment illustrated in Figs. 1-3, the coating 26 is cured in two stages (i.e., initial cure on the casting drum 28 and post cure on the molten substrate 12). It is also possible to coat a rigid substrate by substituting a rigid sheet of the substrate at the nip 54. Such a sheet would be preheated to enhance adhesion of the coating 26 thereto. The sheet temperature, however, should be adjusted to a temperature below the cure temperature of the coating 26 so that the post cure does not proceed prematurely. In such an arrangement, the coating 26 has a sticky free surface 44 and the substrate is not sticky. The interpenetration zone 52, however, forms because the temperature of the coating 26 and the substrate 12 is sufficient to allow an interpenetration reaction.

It is also possible to fully cure the coating 26 on the casting roll 28 and adhere it to a molten substrate. However, in such a case it would be necessary to fully cure the coating 26 on the casting drum 28 under a nitrogen purge which, although workable, is less desirable.

As shown in Fig. 4, it is possible to have a fully cured self supporting coating adhered to a rigid substrate. Such a coating would be attached by means of an appropriate adhesive. In such an arrangement, the substrate 12 would receive an intermediate layer of UV curable adhesive 70 upstream of where the coating 26 is applied between the nip 72 of a pair of opposed rolls 74 thereby forming an uncured laminate. Post lamination cure of the adhesive 70 by a UV source 74 through the coating 26 may then be effected.

If the adhesive 70 is the same material as the coating 26, and if the substrate 12 is heated, an interpenetration zone 58 forms between the substrate 12 and the coating 26 whereby adhesion is achieved. Normally, the adhesive 70 is the same as the coating material and thus during the cure reaction, the adhesive 70 would combine with the coating 26.

In certain embodiments within the scope of the present invention, it may be desirable to apply various coating material in two or more layers. It will be apparent to those well-skilled in the art that the additional layers may be comprised of different types of materials, depending upon the particular end use requirements for the coated substrate. Additional radiation lamps, casting drums, and the like may be employed as appropriate for curing each layer of coating material.

After one or more layers of coating material have been applied to and cured on substrate 12 according to the method of the present invention, the resulting product is guided to a discharge location (not shown) for trimming and cutting into panels or to an appropriate take up roller.

In certain embodiments within the scope of the present invention, it may be desirable to apply a radiation-curable coating 26 which contains some volatile components. Since such volatile components may adversely affect the ability to eliminate air from the coating and surrounding region, they should be removed from the coating prior to cure. This may be accomplished by one or more drying stations 80, as depicted in the Fig. 1. Drying stations 80 are typically a forced hot-air oven system having vapor exhaust means, although any type of ventilated furnace will be suitable for this function. The drying stations 80 are typically situated at some point along the process pathway downstream of the idler roll 32. The volatile components in the coating material are thereby eliminated prior to the radiation curing of the coating.

While there has been described what at present are considered to be the preferred embodiments of the present invention, it will be readily apparent to those skilled in the art that various changes and modifications may be made therein without departing from the invention and it is intended in the appended claims to cover such changes and modifications as fall within the true spirit and scope of the invention.

## Claims

1. A method for forming an abrasion resistant radiation cured coating on at least one surface of a polymeric substrate, said method comprising the steps of:
applying uncured coating material onto a casting surface;
at least partially curing the coating material adjacent the casting surface by exposing the coating to radiant energy directed through the coating material towards the casting surface;
applying the at least partially cured coating material to the substrate; and
exposing the applied coating to radiant energy directed towards the substrate through the coating whereby the coating further cures and adheres to the substrate.

2. A method for directly applying an abrasion resistant radiation curable coating on at least one surface of a polymeric substrate, said method comprising the steps of:
applying a coating of uncured radiation curable coating material onto a casting surface;
anaerobically partially curing the coating material adjacent the casting surface by exposing the coating material to radiant energy directed through the coating towards the casting surface while a free surface portion of the coating remains uncured;
transferring the partially cured coating from the casting surface to the substrate by applying the uncured free surface portion of the partially cured coating against the substrate while maintaining the partially cured coating and substrate at a temperature effective to cause the partially cured coating and the substrate to adhere and form an interpenetration zone therebetween; and
anaerobically curing the uncured portion of the partially cured coating adhered to the substrate by exposing the applied partially cured coating to radiant energy directed therethrough the coating towards the substrate to form a fully cured coating.

3. A method for directly applying an abrasion resistant curable coating to at least one surface of a polymeric substrate comprising the steps of:
applying a coating of uncured radiation curable coating material onto a casting surface;
partially curing the uncured coating material adjacent the casting surface by exposing the coating material to radiant energy directed through the coating material towards the casting surface so as to form a self supporting coating;
forming a composite by applying the self supporting coating to the substrate while maintaining the self supporting coating and the substrate at a temperature effective to cause an interpenetration zone to be formed therebetween;
exposing the applied self supporting coating to energy to cause the composite to fully cure.

4. The method of claim 1, wherein the interpenetration zone forms a mechanical bond between the applied coating and the substrate.

5. The method of claim 3, further comprising the step of regulating the thickness of the coating on the casting drum prior to exposure to radiation.

6. The method of claim 3, wherein said fully cured coating has a hardness such that the hardcoat thereon experiences no more than 10 percent haze after 500 cycles of a CS10F Tabor abrasion wheel at a 500 gram loading.

7. The method of claim 3, wherein said fully cured coating has a degree of flexibility sufficient to allow it to be wrapped around the circumference of a cylinder of radius 3 inches without cracking.

8. Apparatus for applying an abrasion resistant radiation curable coating onto at least one surface of a polymeric substrate comprising:
a casting means for receiving a measured amount of coating material thereon in the form of a film;
coating means for applying the film to the casting means;
a first source of UV radiation located adjacent the casting means downstream of the coating means for emitting UV radiation and causing a portion of the film adjacent the casting means to anaerobically cure;
means for urging the substrate against the casting means downstream of the first source of UV radiation whereby the coating separates from the casting means and selectively adheres to the substrate; and
a second source of UV radiation located adjacent to the substrate and the adhered coating for effecting post cure thereof and secure adhesion to the substrate.

9. The apparatus of claim 8, wherein the casting drum includes a casting roll for receiving the coating thereon and a compression roll engaging the casting roll in rolling contact at a compression nip for establishing a coating thickness.

10. The apparatus of claim 8, wherein the casting means comprises a pair of rollers engaged for longitudinal rotation at a compression nip for receiving therebetween the substrate and for simultaneously transferring the coating to the substrate.

11. The apparatus of claim 10, further including an extruder upstream of the nip between the casting rolls for forming the substrate as an extrudate for compression between at the nip.

12. A method for applying an abrasion resistant UV curable coating on a substrate comprising the steps of:
(i) applying an uncured coating material to a surface of the casting drum, the coating material comprising an amount of polyfunctional acrylate ester monomers and an amount of a photoinitiator,
(ii) passing the applied uncured coating material through a constant pressure compression nip, defined between a longitudinally rotating cylindrical casting drum and a longitudinally rotating cylindrical nip roll, the casting drum and the nip roll having parallel axes of rotation, the nip roll contacting an uncured surface of the coating and the casting drum contacting the applied uncured coating material, the compression nip exerting a substantially constant pressure to said applied uncured coating, said compression nip pressure being selected from between about 5 psi and about 50 psi to eliminate air and excess coating material from between the coating and the drum thereby providing a substantially uniform layer of uncured coating material on the drum, said excess coating material forming a bead of coating material between said nip roll and said casting drum across the width of said coating adjacent to and upstream from said compression nip;
(iii) curing the coating layer by directing ultraviolet radiation through the coating layer while the coating layer is in anaerobic contact with the drum surface to provide at least a partially cured self supporting coating having a cured surface adjacent the casting drum and with cured surface characteristics determined by the casting drum surface, and an uncured free surface, the coating having a thickness selected from between about 0.1 and about 1.5 mils;
(b) laminating the coating onto a polymeric substrate, the laminating involving;
(i) bringing the uncured free surface of the coating into a position adjacent to the surface of said substrate;
(ii) passing the coating through a laminating nip to eliminate diatomic oxygen and excess adhesive from between the coating and the substrate, said laminating nip pressing the coating with a substantially constant pressure to create a substantially uniform adhesion between the uncured surface of the coating film and the substrate; and
(iii) directing ultraviolet radiation through the cured surface of the coating to cure the uncured surface of the coating and bond the coating to the substrate.

13. The method according to claim 12 further comprising the step of:
extruding the substrate in sheet form from a supply of extrudable polymeric material by passing the sheet through a constant pressure compression nip defined between the casting drum and a longitudinally rotating second nip roll to form the substrate into a sheet of uniform thickness, the casting drum and second nip roll having parallel axes of rotation, said second nip roll being located downstream of the first mentioned radiation cure in step (a) (iii) to transfer the at least partially cured coating from the casting drum to the substrate simultaneously with the formulation of the sheet of uniform thickness.

14. A method for applying an abrasion resistant UV curable coating on a substrate comprising the steps of:
(i) applying an uncured coating material to a surface of the casting drum, the coating material comprising, for example, an amount of polyfunctional acrylate ester monomers and an amount of a photoinitiator,
(ii) passing the applied uncured coating material through a constant pressure compression nip, defined between a longitudinally rotating cylindrical casting drum and a longitudinally rotating cylindrical nip roll, the casting drum and the nip roll having parallel axes of rotation, the nip roll contacting an uncured surface of the coating and the casting drum contacting the applied uncured coating material, the compression nip exerting a substantially constant pressure to said applied uncured coating, said compression nip pressure being selected from between about 5 psi and about 50 psi to eliminate air and excess coating material from between the coating and the drum thereby providing a substantially uniform layer of uncured coating material on the drum, said excess coating material forming a bead of coating material between said nip roll and said casting drum across the width of said coating adjacent to and upstream from said compression nip;
(iii) curing the coating by directing ultraviolet radiation through the coating while the coating is in anaerobic contact with the drum surface and a free surface of the coating is under an inert atmosphere to provide a fully cured coating having surface characteristics determined by the casting drum surface, the cured coating having a thickness selected from between about 0.1 and about 1.5 mils;
(b) laminating the fully cured coating onto a polymeric substrate.

15. The method according to claim 14, wherein the laminating step comprises;
(i) preparing an overlay by placing an amount of an acrylic adhesive between a surface of the substrate and the coating and by bringing the coating into a position adjacent to the surface of said substrate;
(ii) passing the overlay through a laminating nip to eliminate diatomic oxygen and excess adhesive from between the coating and the substrate, said laminating nip pressing the overlay with a substantially constant pressure to create a substantially uniform layer of adhesive between the film and the substrate, any excess adhesive forming a bead of adhesive across the width of said substrate between said substrate and said coating adjacent to and upstream from said laminating nip; and
(iii) curing the adhesive layer by directing ultraviolet radiation through the coating to the adhesive layer to cure the adhesive layer and bond the coating to the substrate, said cured adhesive layer having a thickness selected from between about 0.2 and about 2 mils.

16. The method of claim 15, wherein the laminating step comprises:
(iv) extruding the substrate in sheet form from a supply of extrudable polymeric material; and
(v) passing the sheet in a softened condition through a constant pressure compression nip defined between the casting drum and a longitudinally rotating second nip roll to form the substrate into a sheet of uniform thickness, the casting drum and second nip roll having parallel axes of rotation, said second nip roll being located downstream of the radiation cure in step (a) (iii) to transfer the coating from the casting drum to the softened substrate simultaneously with the formulation of the sheet of uniform thickness.
